# EUROPEAN PATENT APPLICATION

(11) **EP 4 807 335 A1**
(43) Date of publication of application: **16.09.2026**
(21) Application number: 25162476.3
(22) Date of filing: 09.03.2025
(51) Int. Cl.: G01M 3/18, G01M 3/28

(54) **A METHOD FOR MONITORING OF CONDITION OF A CABLE CONDUIT FITTING AND A CABLE CONDUIT FITTING MONITORING ARRANGEMENT**

(71) Applicant: ABB Schweiz AG, 5400 Baden (CH)
(72) Inventor: Bacher, Szymon, Krakow (PL); Rzepecki, Micha, 30-650 Kraków (PL); Rybak, Andrzej, 30-349 Kraków (PL); Jablonski, Mateusz, Krakow (PL); Eck, Peter, 8514 Amlikon-Bissegg, (CH)
(74) Representative: AOMB Polska Sp. z.o.o.

(57) **Abstract**

A method for monitoring of condition of a cable conduit fitting comprising the following steps: detecting (101A1) values of relative concentration of gas with variable concentration *Rx*_{*in*(*i*)} inside a cable conduit fitting (1) in a preset time window and creating (102A1) time series of the values of relative concentration of gas with variable concentration *Rx*_{*in*(*i*)} inside the cable conduit fitting (1), wherein each of said values has an assigned timestamp or each of said values is detected (101A1) with a predefined sampling rate, where *i* = (1,2, ...,n); detecting (101A2) values of relative concentration of gas with variable concentration *Rx*_{*out*(*i*)} outside the cable conduit fitting (1) in the preset time window and creating (102A2) time series of the values of relative concentration of gas with variable concentration *Rx*_{*out*(*i*)} outside the cable conduit fitting (1), wherein each of said values has an assigned timestamp or each of said values is detected (101A2) with the predefined sampling rate, where *i* = (1, 2, ... , *n*); wherein the detection (101A1) of the values of relative concentration of gas with variable concentration *Rx*_{*in*(*i*)} inside the cable conduit fitting (1) and the detection (101A2) of the values of relative concentration of gas with variable concentration *Rx*_{*out*(*i*)} outside the cable conduit fitting (1) is synchronized; determining (109) a correlation coefficient based on the values of relative concentration of gas with variable concentration *Rx*_{*in*(*i*)} inside the cable conduit fitting (1) from the created (102A1) time series and on the values of relative concentration of gas with variable concentration *Rx*_{*out*(*i*)} outside the cable conduit fitting (1) from the created (102A2) time series, where i = (1,2, ...,n); assessing (110) condition of the cable conduit fitting (1) by comparing the determined (109) correlation coefficient to a threshold value such that when said correlation coefficient exceeds the threshold value, the cable conduit fitting (1) is considered non-hermetic.

## Description

### Technical field

The present invention relates to a method for monitoring of condition of a cable conduit fitting. Furthermore, the present invention relates to a cable conduit fitting monitoring arrangement.

### Background of the invention

Korean patent KR102370224B1 discloses a cover for bellows comprising a body portion, a packing portion and window portions. The body portion includes a first body portion and a second body portion hinged by a hinge portion. The first and second body portions can be closed to surround a bellow by means a connection portion including a first coupling member and a second coupling member. Further, window portions are located in the first and second body portion so that a state of a surrounded bellow can be checked. The packing portion is disposed around the inner surface of the body portion and may be in close contact with the outer surface of said bellow. Furthermore, the cover comprises a leak detection sensor and a temperature sensor. Each signal generated by the leak detection sensor and the temperature sensor is transmitted to a control unit, and the control unit can measure gas leakage and temperature change.

American patent US11557886B2 discloses a cable conduit fitting having a sensor that may be integrated into a fitting and/or may be placed to an interior space of the fitting. The sensor may detect humidity and/or temperature inside the cable conduit fitting. Furthermore, the cable conduit fitting comprises control unit.

Although the solutions known from the prior art discloses variety of proposals for monitoring of condition of cable conduit fittings, methods for monitoring of condition of cable conduit fittings and cable conduit fitting monitoring arrangement could be characterized by higher accuracy in assessing condition of such cable conduit fittings, in particular in assessing a level of hermiticity of cable conduit fittings and associated detection of cracks in such cable conduit fittings, while maintaining the simplicity of execution of such methods, and as a result characterized by greater reliability of said assessment comparing to known solutions. Further, there is a need to provide cable conduit fitting monitoring arrangements that are adapted to execute such methods and as a result are also characterized by greater reliability of said assessment comparing to known solutions. Therefore, an object of the invention is to provide a method and a cable conduit fitting monitoring arrangement characterized by greater reliability of assessment of condition of a cable conduit fitting compared to known solutions.

### The essence of the invention

The object of the invention is a method for monitoring of condition of a cable conduit fitting, comprising the following steps: detecting values of relative concentration of gas with variable concentration ***Rx*_{*in*(*i*)}** inside a cable conduit fitting in a preset time window and creating time series of the values of relative concentration of gas with variable concentration ***Rx*_{*in*(*i*)}** inside the cable conduit fitting, wherein each of said values has an assigned timestamp or each of said values is detected with a predefined sampling rate, where **i = (1, 2, ... , *n*);** detecting values of relative concentration of gas with variable concentration ***Rx*_{*out*(*i*)}** outside the cable conduit fitting in the preset time window and creating time series of the values of relative concentration of gas with variable concentration ***Rx*_{*out*(*i*)}** outside the cable conduit fitting, wherein each of said values has an assigned timestamp or each of said values is detected with the predefined sampling rate, where ***i* = (1, 2, ... , *n*);** wherein the detection of the values of relative concentration of gas with variable concentration ***Rx*_{*in*(*i*)}** inside the cable conduit fitting and the detection of the values of relative concentration of gas with variable concentration ***Rx*_{*out*(*i*)}** outside the cable conduit fitting is synchronized; determining a correlation coefficient based on the values of relative concentration of gas with variable concentration ***Rx*_{*in*(*i*)}** inside the cable conduit fitting from the created time series and on the values of relative concentration of gas with variable concentration ***Rx*_{*out*(*i*)}** outside the cable conduit from the created time series, where ***i* = (1, 2, ... , *n*);** assessing condition of the cable conduit fitting by comparing the determined correlation coefficient to a threshold value such that when said correlation coefficient exceeds the threshold value, the cable conduit fitting is considered non-hermetic.

The application of the disclosed method for monitoring of condition of a cable conduit fitting provides higher accuracy in assessing condition of the cable conduit fitting, in particular in assessing a level of hermiticity of the cable conduit fitting and associated detection of cracks in such cable conduit fitting, while maintaining the simplicity of its execution, and as a result provides greater reliability of said assessment compared to known solutions. Further, the disclosed method allows for early detection of non-hermiticity of the cable conduit fitting and as a consequence damage of cable systems located inside such cable conduit fitting.

Preferably, wherein after the steps of creating time series of the values of relative concentration of gas with variable concentration ***Rx*_{*in*(*i*)}** inside the cable conduit fitting and creating time series of the values of relative concentration of gas with variable concentration ***Rx*_{*out*(*i*)}** outside the cable conduit fitting, where ***i* = (1, 2,** ... , *n*); and before the step of **determining a correlation coefficient based on the values of relative concentration of gas with variable concentration *Rx*_{*in*(*i*)} inside the cable conduit fitting from the created time series and on the values of relative concentration of gas with variable concentration *Rx*_{*out*(*i*)} outside the cable conduit fitting from the created time series, where *i* = (1, 2, ...,n);** low-frequency spectral components of the values of relative concentration of gas with variable concentration ***Rx*_{*in*(*i*)}** inside the cable conduit fitting from the created time series and low-frequency spectral components of the values of relative concentration of gas with variable concentration ***Rx*_{*out*(*i*)} outside the cable conduit fitting** from the created time series are removed from Fourier spectrums of said values, where **i = (1, 2, ... , *n*);** and inverse Fourier transform is performed for high frequency spectral components of said values of relative concentration of gas with variable concentration ***Rx*_{*in*(*i*)}** inside the cable conduit fitting and inverse Fourier transform is performed for high frequency spectral components of said values of relative concentration of gas with variable concentration ***Rx*_{*out*(*i*)}** outside the cable conduit fitting, where **i = (1, 2, ...,n).**

The application of the disclosed steps ensures an additional increase in the reliability of the method for monitoring of condition of a cable conduit fitting. This is because the removed low-frequency spectral components of the values of relative concentration of gas with variable concentration ***Rx*_{*in*(*i*)}** inside the cable conduit fitting and the removed low-frequency spectral components of the values of relative concentration of gas with variable concentration ***Rx*_{*out*(*i*)} outside the cable conduit fitting** are associated with diffusion of molecules of gas with variable concentration inside the cable conduit fitting and molecules of gas with variable concentration outside the cable conduit fitting, which negatively affects the assessment of condition of the cable conduit fitting. The high frequency spectral components of said values left are the most valuable components for the purpose of the assessment of condition of the cable conduit fitting, and may, for example, be related to the presence of cracks in such cable conduit fitting, which in turn indicates lack of the hermiticity of the cable conduit fitting.

Preferably, the gas with variable concentration is carbon dioxide ***CO*₂** and the detected values are values of relative concentration of carbon dioxide ***RCO*_{2(*in*(*i*))}** inside the cable conduit fitting and values of relative concentration of carbon dioxide ***RCO*_{2(*out*(*i*))}** outside the cable conduit fitting, where **i = (1, 2, ... , *n*).**

The detection of the values of relative concentration of carbon dioxide ***RCO*_{2(*in*(*i*))}** inside the cable conduit fitting and the values of relative concentration of carbon dioxide ***RCO*_{2(*out*(*i*))}** outside the cable conduit fitting is particularly applicable in food processing facilities, due to the fact that it is emitted during fermentation of food products.

Preferably, the gas with variable concentration is methane ***CH*₄** and the detected are values of relative concentration of methane ***CH*_{4(*in*(*i*))}** inside the cable conduit fitting and values of relative concentration of methane ***CH*_{4(*out*(*i*))}** outside the cable conduit fitting, where **i = (1, 2, ... , *n*).**

The detection of the values of relative concentration of methane ***CH*_{4(*in*(*i*))}** inside the cable conduit fitting and the values of relative concentration of methane ***CH*_{4(*out*(*i*))}** outside the cable conduit fitting, where i = (1, 2, ...,n), is particularly applicable in places where there are large changes in the concentration of this gas, e.g. sewage or pig rearing sites.

Preferably, the gas with variable concentration is water ***H*₂*O*** and the detected values are values of relative humidity ***RH*_{*in*(*i*)}** inside the cable conduit fitting and values of relative humidity ***RH*_{*out*(*i*)}** outside the cable conduit fitting, where **i = (1, 2, ... , *n*).**

Performing of the detection of the values of relative humidity ***RH*_{*in*(*i*)}** inside the cable conduit fitting and the values of relative humidity ***RH*_{*out*(*i*)}** outside the cable conduit fitting, where i **= (1, 2, ..., *n*),** ensures higher accuracy in assessing condition of the cable conduit fitting comparing to known solutions.

Preferably, the determined correlation coefficient is Pearson correlation coefficient.

The application of Pearson correlation coefficient ensures the simplicity of determining the correlation coefficient, which leads to the simplification of the operation of the disclosed method, and further to the reduction of operation time of said method.

Preferably, the determined correlation coefficient is Spearman correlation coefficient.

The application of Spearman correlation coefficient ensures acceleration of the disclosed method as the use of said correlation coefficient makes it possible to use smaller time windows than those used with Pearson correlation coefficient.

Preferably, in addition to the detection of the values of relative humidity ***RH*_{*in*(*i*)}** inside the cable conduit fitting, instantaneous values of temperature ***T*_{*in*(*i*)}** inside the cable conduit fitting are detected in said preset time window and there are created time series of the instantaneous values of temperature ***T*_{*in*(*i*)}** inside the cable conduit fitting, wherein each of the instantaneous values of temperatures ***T*_{*in*(*i*)}** inside the cable conduit fitting has an assigned timestamp or is detected with the predefined sampling rate, where **i = (1, 2, ... , *n*);** and in addition to the detection of the values of relative humidity ***RH*_{*out*(*i*)}** outside the cable conduit fitting, instantaneous values of temperature ***T*_{*out*(*i*)}** outside the cable conduit fitting are detected in said preset time window and there are created time series of the instantaneous values of temperature ***T*_{*out*(*i*)}** outside the cable conduit fitting, wherein each of the instantaneous values of temperature ***T*_{*out*(*i*)}** outside the cable conduit fitting has an assigned timestamp or is detected with the predefined sampling rate; the values of relative humidity ***RH*_{*in*(*i*)}** inside the cable conduit fitting from the created time series and the values of relative humidity ***RH*_{*out*(*i*)}** outside the cable conduit fitting from the created time series are converted into, respectively, values of absolute humidity ***AH*_{*in*(*i*)}** inside the cable conduit fitting and values of absolute humidity ***AH*_{*out*(ii)}** outside the cable conduit fitting to create time series of these values, wherein said conversions are performed with the usage of, respectively, the instantaneous values of temperature ***T*_{*in*(*i*)}** inside the cable conduit fitting from the created time series and the instantaneous values of temperature ***T*_{*out*(*i*)}** outside the cable conduit fitting from the created time series, where **i = (1, 2, ... , *n*),** and according to the formula ${AH}_{in \left(i\right) / out \left(i\right)} = 216.7 \left(\frac{\frac{{RH}_{in \left(i\right) / out \left(i\right)}}{100} A exp \left(\frac{m {T}_{in \left(i\right) / out \left(i\right)}}{T + {T}_{in \left(i\right) / out \left(i\right)}}\right)}{273.15 + {T}_{in \left(i\right) / out \left(i\right)}}\right)$
***AH*_{*in*(*i*)/*out*(*i*)}** - a value of absolute humidity inside or outside the cable conduit fitting, where **i = (1, 2, ... , *n*);**
***RH*_{*in*(*i*)/*out*(*i*)}** - a value of relative humidity inside or outside the cable conduit fitting, where **i = (1, 2, ... , *n*);**
***T*_{*in*(*i*)/*out*(*i*)}** - an instantaneous value of temperature inside or outside the cable conduit fitting, where **i = (1, 2, ... , *n*);**
**m = 17.62**
***T* = 243.21 °C**
***A* = 6.112 *hPa***
wherein ***m*, *T, A*** constitute conversion parameters for determining values of absolute humidity ***AH*_{*in*(*i*)/*out*(*i*)}** inside or outside the cable conduit fitting, wherein said conversion parameters result from adopted SI measurement units; and then the correlation coefficient is determined based on the values of absolute humidity ***AH*_{*in*(*i*)}** inside the cable conduit fitting from the created time series and on the values of absolute humidity ***AH*_{*out*(*i*)}** outside the cable conduit fitting from the created time series, where ***i* = (1, 2, ... , *n*).**

The application of the above disclosed method steps ensures a further increase in the reliability of the method for monitoring of condition of a cable conduit fitting.

Preferably, after the steps of creating time series of the instantaneous values of temperature ***T*_{*in*(*i*)}** inside the cable conduit fitting in said preset time window and creating time series of the instantaneous values of temperature ***T*_{*out*(*i*)}** outside the cable conduit fitting in said preset time window, where **i = (1, 2, ... , *n*),** and before the steps of conversions of the values of relative humidity ***RH*_{*in*(*i*)}** inside the cable conduit fitting and the values of relative humidity ***RH*_{*out*(*i*)}** outside the cable conduit fitting into, respectively, the values of absolute humidity ***AH*_{*in*(*i*)}** inside the cable conduit fitting and the values of absolute humidity ***AH*_{*out*(*i*)}** outside the cable conduit fitting, where ***i* = (1, 2, ... , *n*);** low-frequency spectral components of the instantaneous values of temperature ***T*_{*in*(*i*)}** inside the cable conduit fitting from the created time series are removed from Fourier spectrums of said values and low-frequency spectral components of the instantaneous values of temperature ***T*_{*out*(*i*)}** outside the cable conduit fitting from the created time series are removed from Fourier spectrums of said values, where ***i* = (1, 2, ... , *n*);** and inverse Fourier transform is performed for high frequency spectral components of the instantaneous values of temperature ***T*_{*in*(*i*)}** inside the cable conduit fitting and inverse Fourier transform is performed for high frequency spectral components of the instantaneous values of temperature ***T*_{*out*(*i*)}** outside the cable conduit fitting, where ***i* = (1, 2, ... , *n*).**

The application of the disclosed steps ensures an additional increase in the reliability of the method for monitoring of condition of a cable conduit fitting. Thus, the disclosed here method steps ensure the highest increase in the reliability of the method for monitoring of condition of a cable conduit fitting compared to known solutions.

Further, the object of the invention is a cable conduit fitting monitoring arrangement, wherein said arrangement is adapted to be fixed to a cable conduit fitting. The cable conduit fitting monitoring arrangement comprises at least one first sensor exposed to the environment inside the cable conduit fitting, wherein the least one first sensor is configured to detect values of relative concentration of gas with variable concentration ***Rx*_{*in*(*i*)}** inside the cable conduit fitting; a control unit, wherein the control unit is configured to communicate with the at least one first sensor. The cable conduit fitting monitoring arrangement comprises further at least one second sensor exposed to the environment outside the cable conduit fitting, wherein the at least one second sensor is configured to detect values of relative concentration of gas with variable concentration ***Rx*_{*out*(*i*)}** outside the cable conduit fitting; the control unit is configured further to communicate with the at least one second sensor and the control unit is configured to carry out the steps of the method according to the invention.

Preferably, the at least one first sensor is configured further to detect instantaneous values of pressure ***P*_{*in*(*i*)}** inside the cable conduit fitting and/or to detect instantaneous values of temperature ***T*_{*in*(*i*)}** inside the cable conduit fitting and the at least one second sensor is configured further to detect instantaneous values of pressure ***P*_{*out*(*i*)}** outside the cable conduit fitting and/or to detect instantaneous values of temperature ***T*_{*out*(*i*)}** outside the cable conduit fitting, where **i = (1, 2, ... , *n*),** wherein the control unit is configured further to carry out the steps of the method according the invention.

Preferably, the control unit is configured to carry out the steps of the method according to the invention or the arrangement comprises a high-pass filter configured to communicate with the control unit and to carry out the steps of the method according to the invention.

Preferably, the cable conduit fitting monitoring arrangement comprises a battery unit.

Preferably, the cable conduit fitting monitoring arrangement comprises a protecting cover for fixing to the body of the cable conduit fitting.

Preferably, the cable conduit fitting monitoring arrangement comprises a notification unit configured to communicate with the control unit and to notify a user of the arrangement about hermiticity/non hermicity of the cable conduit fitting.

### Advantages of the invention

The method and arrangement according to the invention increase safety in the use of cable conduit fittings compared to the known solutions.

The method and arrangement according to the invention lead to increased lifespan of used cabling systems.

The method and arrangement according to the invention allows for detection of cracks in cable conduit fittings. As a result, it allows predictive maintenance of cable conduit fittings.

The method and arrangement according to the invention allows for monitoring of cable conduit fittings without the need to dismantle cabling systems.

The method and arrangement according to the invention allows for detection of unexpected states of devices nearby the arrangement according to the invention, for example overheating of said devices.

### Description of drawing figures

The subject of the invention is shown in the embodiments in a drawing, in which:

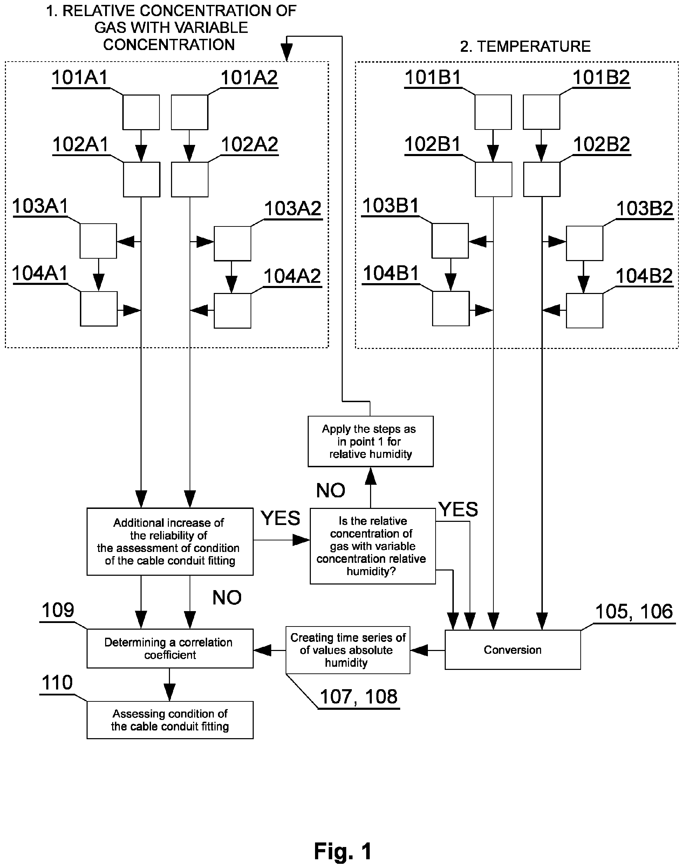

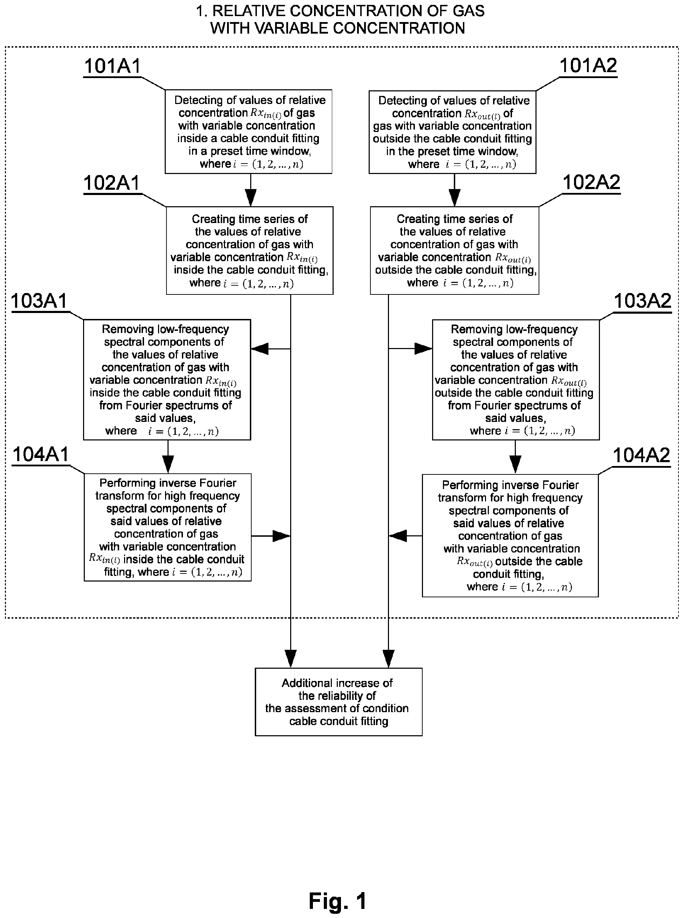

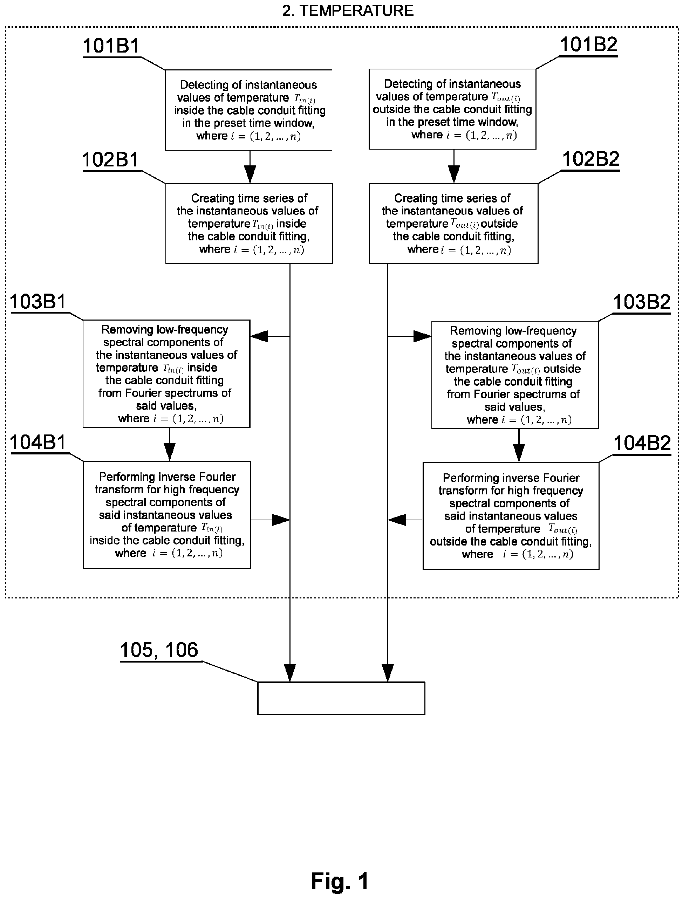

- Fig. 1: presents a flowchart of a method for monitoring of condition of a cable conduit fitting according to the invention;

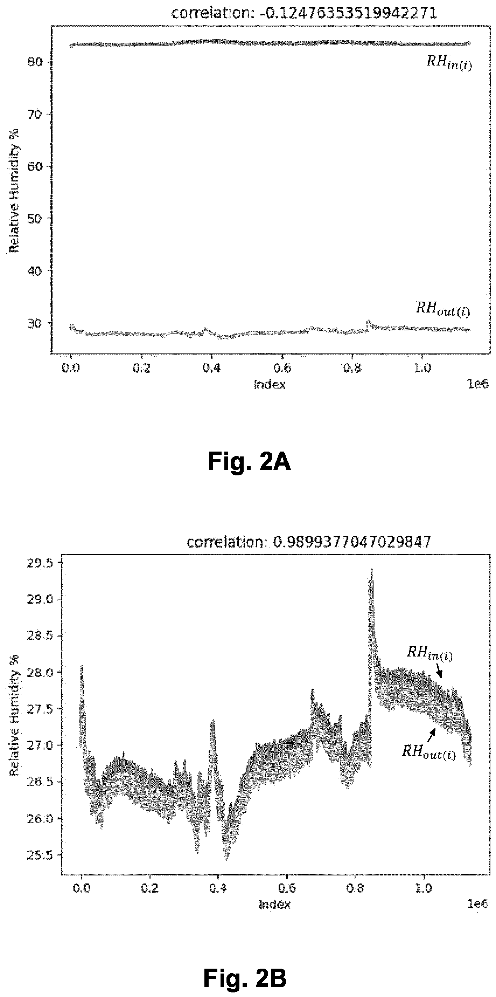

- Fig. 2A: presents a first example of a created time series of values of relative humidity ***RH*_{*in*(*i*)}** inside a cable conduit fitting and a created time series of values of relative humidity ***RH*_{*out*(*i*)}** outside the cable conduit fitting when the cable conduit fitting is considered as hermetic,
- Fig. 2B: presents a second example of a created time series of values of relative humidity ***RH*_{*in*(*i*)}** inside a cable conduit fitting and a created time series of values of relative humidity ***RH*_{*out*(*i*)}** outside the cable conduit fitting when the cable conduit fitting is considered as non-hermetic,

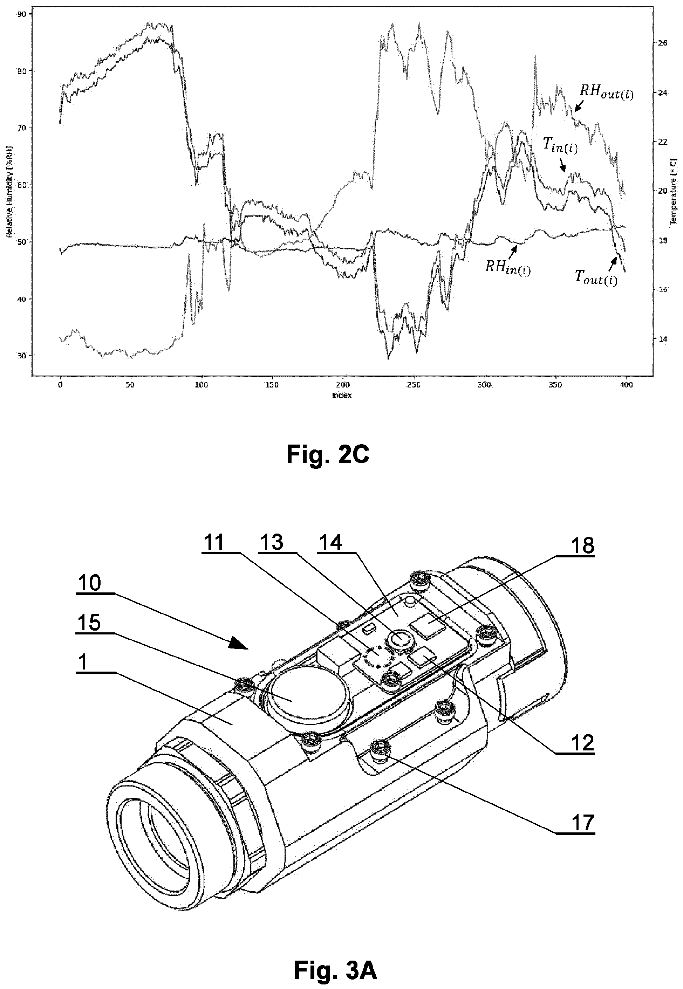

- Fig. 2C: presents an example of a created time series of values of relative humidity ***RH*_{*in*(*i*)}** inside a cable conduit fitting, a created time series of values of relative humidity ***RH*_{*out*(*i*)}** outside the cable conduit fitting, a created time series of values of temperature ***T*_{*in*(*i*)}** inside the cable conduit fitting and a created time series of values of temperature ***T*_{*out*(*i*)}** outside the cable conduit fitting, when the cable conduit fitting is considered as non-hermetic;
- Fig. 3A: presents an uncovered cable conduit fitting monitoring arrangement according to the invention in a perspective view;

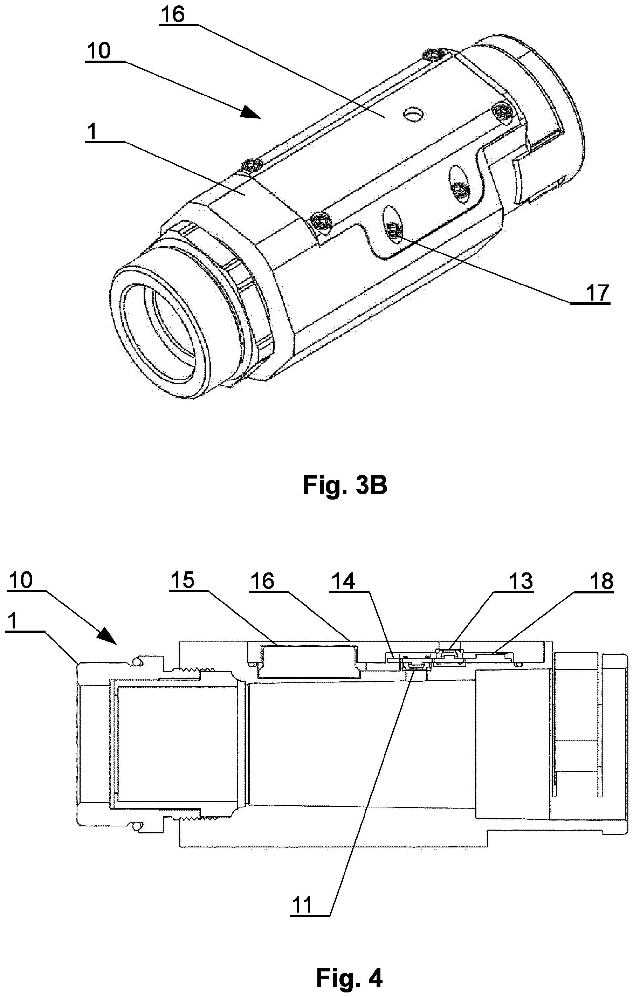

- Fig. 3B: presents a covered cable conduit fitting monitoring arrangement according to the invention in a perspective view;
- Fig. 4: presents schematically a cable conduit fitting monitoring arrangement according to the invention in a longitudinal section.

### Detailed description of the invention

### The first embodiment of the invention

### A method for monitoring of condition of a cable conduit fitting

In a method for monitoring of condition of a cable conduit fitting according to the first embodiment of the invention, values of relative concentration of gas with variable concentration ***Rx*_{*in*(*i*)}** inside a cable conduit fitting 1 are detected 101A1 in a preset time window by a first sensor 11 of a cable conduit fitting monitoring arrangement 10 and time series of the values of relative concentration of gas with variable concentration ***Rx*_{*in*(*i*)}** inside the cable conduit fitting 1 are created 102A1, wherein each of said values has an assigned timestamp, where **i = (1, 2, ... , *n*).** Further, values of relative concentration of gas with variable concentration ***Rx*_{*out*(*i*)}** outside the cable conduit fitting 1 are detected 101A2 by a second sensor 13 of the cable conduit fitting monitoring arrangement 10 in the preset time window and time series of the values of relative concentration of gas with variable concentration ***Rx*_{*out*(*i*)}** outside the cable conduit fitting 1 are created 102A2, wherein each of said values has an assigned timestamp, where **i = (1, 2, ... , *n*).** The detection 101A1 of the values of relative concentration of gas with variable concentration ***Rx*_{*in*(*i*)}** inside the cable conduit fitting 1 and the detection 101A2 of the values of relative concentration of gas with variable concentration ***Rx*_{*out*(*i*)}** outside the cable conduit fitting 1 is synchronized. The mentioned time window can be 5 hours and the detection 101A1, 101A2 of the mentioned values can take place every 5 minutes in case where the key aspect is fast detection of the mentioned values. Thus the sampling rate can be $\frac{1}{300}$ sps. The mentioned time window can also be 24 hours and the detection 101A1, 101A2 of the mentioned values can take place every 30 minutes in case where the key aspect is good life of a battery unit 14 of the arrangement 10. Thus the sampling rate can be $\frac{1}{1800}$ sps. This is applicable for all values detected in the disclosed method.

The gas with variable concentration is water ***H*₂*O*** and the detected 101A1, 101A2 values are values of relative humidity ***RH*_{*in*(*i*)}** inside the cable conduit fitting 1 and values of relative humidity ***RH*_{*out*(*i*)}** outside the cable conduit fitting 1, where **i = (1,2, ...,*n*).** Further, the created 102A1, 102A2 time series are, respectively, time series of the values of relative humidity ***RH*_{*in*(*i*)}** inside the cable conduit fitting 1 and time series of values of relative humidity ***RH*_{*out*(*i*)}** outside the cable conduit fitting 1, where **i = (1,2, ...,n).** Performing of the detection 101A1, 101A2 of the values of relative humidity ***RH*_{*in*(*i*)}** inside the cable conduit fitting 1 and the values of relative humidity ***RH*_{*out*(*i*)}** outside the cable conduit fitting 1, where **i = (1, 2, ...,n),** ensures higher accuracy in assessing condition of the cable conduit fitting 1 comparing to known solutions.

Next, a correlation coefficient is determined 109 based on the values of relative concentration of gas with variable concentration ***Rx*_{*in*(*i*)}** inside the cable conduit fitting 1 from the created 102A1 time series and on the values of relative concentration of gas with variable concentration ***Rx*_{*out*(*i*)}** outside the cable conduit fitting 1 from the created 102A2 time series, where ***i* = (1, 2, ...,*n*).** The determined 109 correlation coefficient is Pearson correlation coefficient. The application of Pearson correlation coefficient ensures the simplicity of determining 109 the correlation coefficient, which leads to the simplification of the operation of the disclosed method.

Finally, condition of the cable conduit fitting 1 is assessed 110 by comparing the determined 109 correlation coefficient to a threshold value such that when said correlation coefficient exceeds the threshold value, the cable conduit fitting 1 is considered non-hermetic. In case of application of the Pearson correlation coefficient the assessment 110 of condition of the cable conduit fitting 1 can be for example performed such that when the determined 109 correlation coefficient is from -0.5 to 0 or from 0 to 0.5, then the cable conduit fitting 1 is considered hermetic and when the determined 109 correlation coefficient is from -0.5 to -1 or from 0.5 to 1, then the cable conduit fitting 1 is considered non-hermetic.

A threshold value that, if exceeded, indicates that a cable conduit fitting is to be considered non-hermetic can be different for different types of monitored cable conduit fittings. This is influenced, among other things, by material and geometric parameters, such as length, inner diameter or outer diameter, of a cable conduit fitting of a given type. It is also influenced by the age of such cable conduit fitting. Further, a threshold value for a new cable conduit fitting of a given type may differ from a threshold value for a used cable conduit fitting of the same type. Hence, a threshold value is determined for each type of cable conduit fittings experimentally. For example, for a new cable conduit fitting, a hole with a diameter of 1 mm can be made in said cable conduit fitting and, based on this, a threshold value indicating that such cable conduit fitting is non-hermetic can be determined. For example, for a used cable conduit fitting, it is possible to first determine its correlation coefficient, and then a correlation coefficient for a new cable conduit fitting of the same type with identical parameters. The difference in their values indicates that the former one is non-hermetic, what can be caused, for example, by its damage. It may have cracks. In this case, a value of the correlation coefficient determined for the used cable conduit fitting is to be considered as a threshold value. On the other hand, when a value of the correlation coefficient determined for the used cable conduit fitting and a value of the correlation coefficient determined for the new cable conduit fitting of the same type are the same, it can be assumed that the used cable conduit fitting is suitable for further use. In this case, in order to determine a threshold value for the used cable conduit fitting, a hole with a diameter of 1 mm can be made in the new cable conduit fitting and, based on this, a threshold value indicating that the used cable conduit fitting is non-hermetic can be determined.

The application of the disclosed method for monitoring of condition of a cable conduit fitting provides higher accuracy in assessing condition of the cable conduit fitting 1, in particular in assessing a level of hermiticity of the cable conduit fitting 1 and associated detection of cracks in such cable conduit fitting, while maintaining the simplicity of its execution, and as a result provides greater reliability of said assessment compared to known solutions. Further, the disclosed method allows for early detection of non-hermiticity of the cable conduit fitting 1 and as a consequence damage of cable systems located inside such cable conduit fitting.

### A cable conduit fitting monitoring arrangement

A cable conduit fitting monitoring arrangement 10, wherein said arrangement 10 is adapted to be fixed to a cable conduit fitting 1. The cable conduit fitting monitoring arrangement 10 comprises a first sensor 11 exposed to the environment inside the cable conduit fitting 1. The first sensor 11 can be exposed to the environment inside the cable conduit fitting 1 through a membrane (not shown on the figures). The first sensor 11 is configured to detect 101A1 values of relative concentration of gas with variable concentration ***Rx*_{*in*(*i*)}** inside the cable conduit fitting (1), in this case values of relative humidity ***RH*_{*in*(*i*)}** inside the cable conduit fitting 1, where ***i* = (1, 2, ... , *n*).** The cable conduit fitting monitoring arrangement 10 comprises also a control unit 12, wherein the control unit 12 is configured to communicate with the first sensor 11. The cable conduit fitting monitoring arrangement 10 comprises further a second sensor 13 exposed to the environment outside the cable conduit fitting 1. The second sensor 13 can be exposed to the environment outside the cable conduit fitting 1 through said membrane. The second sensor 13 is configured to detect 101A2 values of relative concentration of gas with variable concentration ***Rx*_{*out*(*i*)}** outside the cable conduit fitting (1), in this case values of relative humidity ***RH*_{*out*(*i*)}** outside the cable conduit fitting 1, where ***i* = (1, 2, ... , *n*).** The first sensor 11 and the second sensor 13 can be separated from each other by gaskets (not shown on the figures). The control unit 12 is connected with the first sensor 11 and the second sensor 13, wherein the connections are realized via a printed circuit board 14. The control unit 12 is configured further to communicate with the second sensor 13 and the control unit 12 is configured to carry out the steps of the method according to the first embodiment of the invention. Furthermore, the arrangement 10 comprises a battery unit 15. The arrangement 10 comprises also a protecting cover 16 for fixing to the body of the cable conduit fitting 1. The protecting cover can be fixed to the body of the cable conduit fitting 1 by screws 17.

Moreover, said arrangement 10 comprises a notification unit 18 configured to communicate with the control unit 12 and to notify a user of the arrangement 10 about hermiticity/non-hermicity of the cable conduit fitting 1. For example the notification unit 18 can be adapted to emit light or sound. Thus it can be in the form of a Light Emitting Diode or Bluetooth radio. In the other embodiments the notification unit 18 can be an external notification unit that communicates with the control unit 12 wirelessly.

The application of cable conduit fitting monitoring arrangement 10 as disclosed above allows to execute the method according to the invention and thus said arrangement 10 is characterized by higher accuracy in assessing condition of the cable conduit fitting 1, in particular assessing a level of hermiticity of the cable conduit fitting 1 and associated detection of cracks in such cable conduit fitting 1, and as a result said arrangement 10 is characterized by greater reliability of said assessment compared to known solutions. Further, the disclosed arrangement 10 allows for early detection of non-hermiticity of the cable conduit fittings 1 and as a consequence damage of cable systems located inside such cable conduit fitting 1.

### The second embodiment of the invention

### A method for monitoring of condition of a cable conduit fitting

The second embodiment of the method for monitoring of condition of a cable conduit fitting is like the first embodiment, with the difference that the determined 109 correlation coefficient is Spearman correlation coefficient. The application of Spearman correlation coefficient ensures acceleration of the disclosed method as the use of said correlation coefficient makes it possible to use smaller time windows than those used with Pearson correlation coefficient.

### A cable conduit fitting monitoring arrangement

The second embodiment of the cable conduit fitting monitoring arrangement 10 is like the first embodiment, with the difference that the control unit 12 is configured to carry out the steps of the method according to the second embodiment of the invention.

### The third embodiment of the invention

### A method for monitoring of condition of a cable conduit fitting

The third embodiment of the method for monitoring of condition of a cable conduit fitting, is like the first embodiment or the second embodiment, with the difference that after the steps of creating 102A1 time series of the values of relative humidity ***RH*_{*in*(*i*)}** inside the cable conduit fitting 1 and creating 102A2 time series of the values of relative humidity ***RH*_{*out*(*i*)}** outside the cable conduit fitting 1, where ***i* = (1, 2, ... , *n*),** and before the step of **determining 109 a correlation coefficient based on the values of relative humidity *RH*_{*in*(*i*)} inside the cable conduit fitting 1 from the created 102A1 time series and on the values of** relative humidity ***RH*_{*out*(*i*)} outside the cable conduit fitting 1 from the created 102A2 time series, where *i* = (1, 2, ... , *n*),** low-frequency spectral components of the values of relative humidity ***RH*_{*in*(*i*)}** inside the cable conduit fitting 1 from the created 102A1 time series and low-frequency spectral components of the values of relative humidity ***RH*_{*out*(*i*)} outside the cable conduit fitting** 1 from the created 102A2 time series are removed 103A1, 103A2 from Fourier spectrums of said values, where ***i* = (1, 2, ...,n),** and inverse Fourier transform is performed 104A1 for high frequency spectral components of said values of relative humidity ***RH*_{*in*(*i*)}** inside the cable conduit fitting 1 and inverse Fourier transform is performed 104A2 for high frequency spectral components of said values of relative humidity ***RH*_{*out*(*i*)}** outside the cable conduit fitting 1, where ***i* = (1, 2, ... , *n*).**

The application of the disclosed steps ensures an additional increase in the reliability of the method for monitoring of condition of a cable conduit fitting. This is because the removed 103A1 low-frequency spectral components of the values of relative concentration of gas with variable concentration ***Rx*_{*in*(*i*)}** inside the cable conduit fitting 1, so in this case of the values of relative humidity ***RH*_{*in*(*i*)}** inside the cable conduit fitting 1 and the removed 103A2 low-frequency spectral components of the values relative concentration of gas with variable concentration ***Rx*_{*out*(*i*)} outside the cable conduit fitting 1, do in this case of** the values relative humidity ***RH*_{*out*(*i*)} outside the cable conduit fitting 1** are associated with diffusion of molecules of ***H*₂*O*** inside the cable conduit fitting 1 and molecules of ***H*₂*O*** outside the cable conduit fitting 1, which negatively affects the assessment 110 of condition of the cable conduit fitting 1. The high frequency spectral components of said values left are the most valuable components for the purpose of the assessment 110 of condition of the cable conduit fitting 1, and may, for example, be related to the presence of cracks in such cable conduit fitting 1, which in turn indicates lack of the hermiticity of the cable conduit fitting 1.

### A cable conduit fitting monitoring arrangement

The third embodiment of the cable conduit fitting monitoring arrangement 10, is like the first embodiment or the second embodiment, with the difference that the control unit 12 is configured to carry out the steps of the method according to the third embodiment of the invention. In the other embodiments, the arrangement 10 comprises a high-pass filter (not shown on the figures) configured to communicate with the control unit 12 and to carry out the steps of the method according to the third embodiment of the invention.

### The fourth embodiment of the invention

### A method for monitoring of condition of a cable conduit fitting

The fourth embodiment of the method for monitoring of condition of a cable conduit fitting, is like the first embodiment or the second embodiment or the third embodiment, with the difference that in addition to the detection 101A1 of the values of relative humidity ***RH*_{*in*(*i*)}** inside the cable conduit fitting 1, instantaneous values of temperature ***T*_{*in*(*i*)}** are detected 101B1 by the first sensor 11 of the arrangement 10 in said preset time window and there are created 102B1 time series of the instantaneous values of temperature ***T*_{*in*(*i*)}** inside the cable conduit fitting 1, wherein each of the instantaneous values of temperature ***T*_{*in*(*i*)}** inside the cable conduit fitting 1 has an assigned timestamp, where ***i* = (1, 2, ... , *n*).** Further, in addition to the detection 101A2 of the values of relative humidity ***RH*_{*out*(*i*)}** outside the cable conduit fitting 1, instantaneous values of temperature ***T*_{*out*(*i*)}** are detected 101B2 by the second sensor 13 of the arrangement 10 in said preset time window and there are created 102B2 time series of the instantaneous values of temperature ***T*_{*out*(*i*)}** outside the cable conduit fitting 1, wherein each of the instantaneous values of temperature ***T*_{*out*(*i*)}** outside the cable conduit fitting 1 has an assigned timestamp, where ***i* = (1, 2, ... , *n*).** The detection 101B1 of the instantaneous values of temperature ***T*_{*in*(*i*)}** inside the cable conduit fitting 1 and the detection 101B2 of the instantaneous values of temperature ***T*_{*out*(*i*)}** outside the cable conduit fitting 1 is synchronized. Further said detection 101B1 of the instantaneous values of temperature ***T*_{*in*(*i*)}** inside the cable conduit fitting 1 and said detection 101B2 of the instantaneous values of temperature ***T*_{*out*(*i*)}** outside the cable conduit fitting 1 are synchronized with said detection 101A1 of the values of relative humidity ***RH*_{*in*(*i*)}** inside the cable conduit fitting 1 and said detection 101A2 of the values of relative humidity ***RH*_{*out*(*i*)}** outside the cable conduit fitting 1. In the other embodiments, said values can be detected 101B1, 101B2 with the predefined sampling rate within said preset time window.

The values of relative humidity ***RH*_{*in*(*i*)}** inside the cable conduit fitting 1 from the created 102A1 time series and the values of relative humidity ***RH*_{*out*(*i*)}** outside the cable conduit fitting 1 from the created 102A2 time series are converted 105, 106 into, respectively, values of absolute humidity ***AH*_{*in*(*i*)}** inside the cable conduit fitting 1 and values of absolute humidity ***AH*_{*out*(*i*)}** outside the cable conduit fitting 1 to create 107, 108 time series of these values, wherein said conversions 105, 106 are performed with the usage of, respectively, the instantaneous values of temperature ***T*_{*in*(*i*)}** inside the cable conduit fitting 1 from the created 102C1 time series and the instantaneous values of temperature ***T*_{*out*(*i*)}** outside the cable conduit fitting 1 from the created 102C2 time series, where ***i* = (1, 2, ... , *n*);** and according to the formula ${AH}_{in \left(i\right) / out \left(i\right)} = 216.7 \left(\frac{\frac{{RH}_{in \left(i\right) / out \left(i\right)}}{100} A exp \left(\frac{m {T}_{in \left(i\right) / out \left(i\right)}}{T + {T}_{in \left(i\right) / out \left(i\right)}}\right)}{273.15 + {T}_{in \left(i\right) / out \left(i\right)}}\right)$ where
***AH*_{*in*(*i*)/*out*(*i*)}** - a value of absolute humidity inside or outside the cable conduit fitting 1, where ***i* = (1, 2, ... , *n*);**
***RH*_{*in*(*i*)/*out*(*i*)}** - a value of relative humidity inside or outside the cable conduit fitting 1, where ***i* = (1, 2, ... , *n*);**
***T*_{*in*(*i*)/*out*(*i*)}** - an instantaneous value of temperature inside or outside the cable conduit fitting 1, where ***i* = (1, 2, ... , *n*);**
***m* = 17.62**
***T* = 243.21 °C**
***A* = 6.112 *hPa***
wherein ***m*, *T, A*** constitute conversion parameters for determining values of absolute humidity ***AH*_{*in*(*i*)/*out*(*i*)}** inside or outside the cable conduit fitting 1, wherein said conversion parameters result from adopted SI measurement units.

In the next step the correlation coefficient is determined 109 based on the values of absolute humidity ***AH*_{*in*(*i*)}** inside the cable conduit fitting 1 from the created 107 time series and on the values of absolute humidity ***AH*_{*out*(*i*)}** outside the cable conduit fitting 1 from the created 108 time series, where ***i* = (1, 2, ... , *n*),** instead of the values of relative ***RH*_{*in*(*i*)}** inside the cable conduit fitting 1 from the created 102A1 time series and the values of relative humidity ***RH*_{*out*(*i*)}** outside the cable conduit fitting 1 from the created 102A2 time series, where ***i* = (1, 2, ... , *n*).**

The application of the above disclosed method steps ensures an additional increase in the reliability of the method for monitoring of condition of a cable conduit fitting.

### A cable conduit fitting monitoring arrangement

The fourth embodiment of the cable conduit fitting monitoring arrangement 10, is like the first embodiment or the second embodiment or the third embodiment, with the difference that the first sensor 11 is configured further to detect 101B1 instantaneous values of temperature ***T*_{*in*(*i*)}** inside the cable conduit fitting 1, the second sensor 13 is configured further to detect 101B2 instantaneous values of temperature ***T*_{*out*(*i*)}** outside the cable conduit fitting 1, where ***i =* (1, 2, ... , *n*),** and the control unit 12 is configured to carry out the steps of the method according to the fourth embodiment of the invention.

### The fifth embodiment of the invention

### A method for monitoring of condition of a cable conduit fitting

The fifth embodiment of the method for monitoring of condition of a cable conduit fitting 1 is like the fourth embodiment, with the difference that after the steps of creating 102B1 time series of the instantaneous values of temperature ***T*_{*in*(*i*)}** inside the cable conduit fitting 1 in said preset time window and creating 101B1 time series of the instantaneous temperature ***T*_{*out*(*i*)}** outside the cable conduit fitting 1 in said preset time window, where ***i* = (1, 2, ... , *n*),** and before the steps of conversions **105, 106 of** the values of relative humidity ***RH*_{*in*(*i*)}** inside the cable conduit fitting 1 and the values of relative humidity ***RH*_{*out*(*i*)}** outside the cable conduit fitting 1 into, respectively, the values of absolute humidity ***AH*_{*in*(*i*)}** inside the cable conduit fitting 1 and the values of absolute humidity ***AH*_{*out*(*i*)}** outside the cable conduit fitting 1, where ***i =* (1, 2, ..., *n*);** low-frequency spectral components of the instantaneous values of temperature ***T*_{*in*(*i*)}** inside the cable conduit fitting 1 from the created 102B1 time series are removed 103B1 from Fourier spectrums of said values and low-frequency spectral components of the instantaneous values of temperature ***T*_{*out*(*i*)}** outside the cable conduit fitting 1 from the created 102B2 time series are removed 103B2 from Fourier spectrums of said values, where ***i* = (1, 2, ... , *n*).** Next, inverse Fourier transform is performed 104B1 for high frequency spectral components of the instantaneous values of temperature ***T*_{*in*(*i*)}** inside the cable conduit fitting 1 and inverse Fourier transform is performed 104B2 for high frequency spectral components of the instantaneous values of temperature ***T*_{*out*(*i*)}** outside the cable conduit fitting 1, where ***i* = (1, 2, ... , *n*).**

The application of the disclosed steps ensures another increase in the reliability of the method for monitoring of condition of a cable conduit fitting. Thus, the disclosed here method steps ensure the highest increase in the reliability of the method for monitoring of condition of a cable conduit fitting compared to known solutions.

### A cable conduit fitting monitoring arrangement

The fifth embodiment of the cable conduit fitting monitoring arrangement, is like the fourth embodiment, with the difference that the control unit 12 is configured to carry out the steps of the method according to the fifth embodiment of the invention. In the other embodiments, the arrangement 10 comprises the high-pass filter (not shown in the figures) configured to communicate with the control unit 12 and to carry out the steps of the method according to the fifth embodiment of the invention.

### The sixth embodiment of the invention

### A method for monitoring of condition of a cable conduit fitting

The sixth embodiment of the method for monitoring of condition of a cable conduit fitting, is like the first embodiment or the second embodiment or the third embodiment, with the difference that the gas with variable concentration is carbon dioxide ***CO*₂** and the detected values 101A1, 101A2 are values of relative concentration of carbon dioxide ***RCO*_{2(*in*(*i*))}** inside the cable conduit fitting 1 and values of relative concentration of carbon dioxide ***RCO*_{2(*out*(*i*))}** outside the cable conduit fitting 1, where ***i* = (1, 2, ... , *n*).**

The detection 101A1, 101A2 of the values of relative concentration of carbon dioxide ***RCO*_{2(*in*(*i*))}** inside the cable conduit fitting 1 and the values of relative concentration of carbon dioxide ***RCO*_{2(*out*(*i*))}** outside the cable conduit fitting 1, where ***i* = (1, 2, ... , *n*),** is particularly applicable in food processing facilities, due to the fact that it is emitted during fermentation of food products.

### A cable conduit fitting monitoring arrangement

The sixth embodiment of the cable conduit fitting monitoring arrangement 10, is like the first embodiment or the second embodiment or the third embodiment, with the difference that the first sensor 11 of the arrangement 10 is configured to detect 101A1 values of relative concentration of carbon dioxide ***RCO*_{2(*in*(*i*))}** inside the cable conduit fitting 1 and the second sensor 13 is configured to detect 101A2 values of relative concentration of carbon dioxide ***RCO*_{2(*out*(*i*))}** outside the cable conduit 1.

### The seventh embodiment of the invention

### A method for monitoring of condition of a cable conduit fitting

The seventh embodiment of the method for monitoring of condition of a cable conduit fitting, is like the first embodiment or the second embodiment or the third embodiment, with the difference that the gas with variable concentration is methane ***CH*₄** and the detected values 101A1, 101A2 are values of relative concentration of methane ***CH*_{4(*in*(*i*))}** inside the cable conduit fitting 1 and values of relative concentration of methane ***CH*_{4(*out*(*i*))}** outside the cable conduit fitting 1, where ***i* = (1, 2, ... , *n*).**

The detection 101A1, 101A2 of the values of relative concentration of methane ***CH*_{4(*in*(*i*))}** inside the cable conduit fitting 1 and the values of relative concentration of methane ***CH*_{4(*out*(*i*))}** outside the cable conduit fitting 1, where ***i* = (1, 2, ... , *n*),** is particularly applicable in places where there are large changes in the concentration of this gas, e.g. sewage or pig rearing sites. Further, other volatile organic compounds can also be used in the disclosed method.

### A cable conduit fitting monitoring arrangement

The seventh embodiment of the cable conduit fitting monitoring arrangement 10, is like the first embodiment or the second embodiment or the third embodiment, with the difference that the first sensor 11 of the arrangement 10 is configured to detect 101A1 values of relative concentration of methane ***CH*_{4(*in*(*i*))}** inside the cable conduit fitting 1 and the second sensor 13 is configured to detect 101A2 values of relative concentration of methane ***CH*_{4(*out*(*i*))}** outside the cable conduit fitting1.

### Designations:

1 - cable conduit fitting
10 - arrangement for monitoring of condition a cable conduit fitting
11 - first sensor
12 - control unit
13 - second sensor
14 - printed circuit board
15 - battery unit
16 - protecting cover
17 - screws
18 - notification unit

## Claims

1. A method for monitoring of condition of a cable conduit fitting, comprising the following steps:
- detecting (101A1) values of relative concentration of gas with variable concentration ***Rx*_{*in*(*i*)}** inside a cable conduit fitting (1) in a preset time window and creating (102A1) time series of the values of relative concentration of gas with variable concentration ***Rx*_{*in*(*i*)}** inside the cable conduit fitting (1), wherein each of said values has an assigned timestamp or each of said values is detected (101A1) with a predefined sampling rate, where ***i* = (1, 2, ... , *n*);**
- detecting (101A2) values of relative concentration of gas with variable concentration ***Rx*_{*out*(*i*)}** outside the cable conduit fitting (1) in the preset time window and creating (102A2) time series of the values of relative concentration of gas with variable concentration ***Rx*_{*out*(*i*)}** outside the cable conduit fitting (1), wherein each of said values has an assigned timestamp or each of said values is detected (101A2) with the predefined sampling rate, where ***i* = (1, 2, ...,*n*);**
wherein the detection (101A1) of the values of relative concentration of gas with variable concentration ***Rx*_{*in*(*i*)}** inside the cable conduit fitting (1) and the detection (101A2) of the values of relative concentration of gas with variable concentration ***Rx*_{*out*(*i*)}** outside the cable conduit fitting (1) is synchronized;
- determining (109) a correlation coefficient based on the values of relative concentration of gas with variable concentration ***Rx*_{*in*(*i*)}** inside the cable conduit fitting (1) from the created (102A1) time series and on the values of relative concentration of gas with variable concentration ***Rx*_{*out*(*i*)}** outside the cable conduit fitting (1) from the created (102A2) time series, where ***i* = (1, 2, ... , *n*);**
- assessing (110) condition of the cable conduit fitting (1) by comparing the determined (109) correlation coefficient to a threshold value such that when said correlation coefficient exceeds the threshold value, the cable conduit fitting (1) is considered non-hermetic.

2. The method according to claim 1, wherein after the steps of
- creating (102A1) time series of the values of relative concentration of gas with variable concentration ***Rx*_{*in*(*i*)}** inside the cable conduit fitting (1) and creating (102A2) time series of the values of relative concentration of gas with variable concentration ***Rx*_{*out*(*i*)}** outside the cable conduit fitting (1), where ***i* = (1, 2, ... , *n*);** and before the step of
- **determining (109) a correlation coefficient based on the values of relative concentration of gas with variable concentration *Rx*_{*in*(*i*)} inside the cable conduit fitting (1) from the created (102A1) time series and on the values of relative concentration of gas with variable concentration *Rx*_{*out*(*i*)} outside the cable conduit fitting (1) from the created (102A2) time series, where *i* = (1, 2, ... , *n*);**
- low-frequency spectral components of the values of relative concentration of gas with variable concentration ***Rx*_{*in*(*i*)}** inside the cable conduit fitting (1) from the created (102A1) time series and low-frequency spectral components of the values of relative concentration of gas with variable concentration ***Rx*_{*out*(*i*)} outside the cable conduit fitting** (1) from the created (102A2) time series are removed (103A1, 103A2) from Fourier spectrums of said values, where ***i* = (1, 2, ... , *n*);** and
- inverse Fourier transform is performed (104A1) for high frequency spectral components of said values of relative concentration of gas with variable concentration ***Rx*_{*in*(*i*)}** inside the cable conduit fitting (1) and inverse Fourier transform is performed (104A2) for high frequency spectral components of said values of relative concentration of gas with variable concentration ***Rx*_{*out*(*i*)}** outside the cable conduit fitting (1), where ***i* = (1, 2, ... , *n*).**

3. The method according to claim 1 or 2, wherein the gas with variable concentration is carbon dioxide ***CO*₂** and the detected values (101A1, 101A2) are values of relative concentration of carbon dioxide ***RCO*_{2(*in*(*i*))}** inside the cable conduit fitting (1) and values of relative concentration of carbon dioxide ***RCO*_{2(*out*(*i*))}** outside the cable conduit fitting (1), where ***i* = (1, 2, ... , *n*).**

4. The method according to claim 1 or 2, wherein the gas with variable concentration is methane ***CH*₄** and the detected values (101A1, 101A2) are values of relative concentration of methane ***CH*_{4(*in*(*i*))}** inside the cable conduit fitting (1) and values of relative concentration of methane ***CH*_{4(*out*(*i*))}** outside the cable conduit fitting (1), where ***i* = (1, 2, ... , *n*).**

5. The method according to claim 1 or 2, wherein the gas with variable concentration is water ***H*₂*O*** and the detected (101A1, 101A2) values are values of relative humidity ***RH*_{*in*(*i*)}** inside the cable conduit fitting (1) and values of relative humidity ***RH*_{*out*(*i*)}** outside the cable conduit fitting (1), where ***i* = (1, 2, ... , *n*).**

6. The method according to any of the preceding claims from 1 to 5, wherein the determined (109) correlation coefficient is Pearson correlation coefficient.

7. The method according to any of the preceding claims from 1 to 5, wherein the determined (109) correlation coefficient is Spearman correlation coefficient.

8. The method according to any of the preceding claims from 1 to 7, wherein
- in addition to the detection (101A1) of the values of relative humidity ***RH*_{*in*(*i*)}** inside the cable conduit fitting (1), instantaneous values of temperature ***T*_{*in*(*i*)}** inside the cable conduit fitting (1) are detected (101B1) in said preset time window and there are created (102B1) time series of the instantaneous values of temperature ***T*_{*in*(*i*)}** inside the cable conduit fitting (1), wherein each of the instantaneous values of temperatures ***T*_{*in*(*i*)}** inside the cable conduit fitting (1) has an assigned timestamp or is detected (101B1) with the predefined sampling rate, where ***i* = (1, 2, ... , *n*);** and
- in addition to the detection (101A2) of the values of relative humidity ***RH*_{*out*(*i*)}** outside the cable conduit fitting (1), instantaneous values of temperature ***T*_{*out*(*i*)}** outside the cable conduit fitting (1) are detected (101B2) in said preset time window and there are created (102B2) time series of the instantaneous values of temperature ***T*_{*out*(*i*)}** outside the cable conduit fitting (1), wherein each of the instantaneous values of temperature ***T*_{*out*(*i*)}** outside the cable conduit fitting (1) has an assigned timestamp or is detected (101B2) with the predefined sampling rate, where ***i* = (1, 2, ... , *n*);**
- the values of relative humidity ***RH*_{*in*(*i*)}** inside the cable conduit fitting (1) from the created (102A1) time series and the values of relative humidity ***RH*_{*out*(*i*)}** outside the cable conduit fitting (1) from the created (102A2) time series are converted (105, 106) into, respectively, values of absolute humidity ***AH*_{*in*(*i*)}** inside the cable conduit fitting (1) and values of absolute humidity ***AH*_{*out*(*i*)}** outside the cable conduit fitting (1) to create (107, 108) time series of these values, wherein said conversions (105, 106) are performed with the usage of, respectively, the instantaneous values of temperature ***T*_{*in*(*i*)}** inside the cable conduit fitting (1) from the created (102C1) time series and the instantaneous values of temperature ***T*_{*out*(*i*)}** outside the cable conduit fitting (1) from the created (102C2) time series, where ***i* = (1, 2, ... , *n*),** and according to the formula ${AH}_{in \left(i\right) / out \left(i\right)} = 216.7 \left(\frac{\frac{{RH}_{in \left(i\right) / out \left(i\right)}}{100} A exp \left(\frac{m {T}_{in \left(i\right) / out \left(i\right)}}{T + {T}_{in \left(i\right) / out \left(i\right)}}\right)}{273.15 + {T}_{in \left(i\right) / out \left(i\right)}}\right)$ where
***AH*_{*in*(*i*)/*out*(*i*)}** - a value of absolute humidity inside or outside the cable conduit fitting (1), where ***i* = (1, 2, ... , *n*);**
***RH*_{*in*(*i*)/*out*(*i*)}** - a value of relative humidity inside or outside the cable conduit fitting (1), where ***i* = (1, 2, ... , *n*);**
***T*_{*in*(*i*)/*out*(*i*)}** - an instantaneous value of temperature inside or outside the cable conduit fitting (1), where ***i* = (1, 2, ... , *n*);**
***m* = 17.62**
***T* = 243.21 °C**
***A* = 6.112 *hPa***
wherein ***m*, *T, A*** constitute conversion parameters for determining values of absolute humidity ***AH*_{*in*(*i*)/*out*(*i*)}** inside or outside the cable conduit fitting (1), wherein said conversion parameters result from adopted SI measurement units;
- and then the correlation coefficient is determined (109) based on the values of absolute humidity ***AH*_{*in*(*i*)}** inside the cable conduit fitting (1) from the created (107) time series and on the values of absolute humidity ***AH*_{*out*(*i*)}** outside the cable conduit fitting (1) from the created (108) time series, where ***i* = (1, 2, ... , *n*).**

9. The method according to claim 8, wherein
after the steps of
- creating (102B1) time series of the instantaneous values of temperature ***T*_{*in*(*i*)}** inside the cable conduit fitting (1) in said preset time window and creating (102B2) time series of the instantaneous values of temperature ***T*_{*out*(*i*)}** outside the cable conduit fitting (1) in said preset time window, where ***i* = (1, 2, ... , *n*),** and
before the steps of
- **conversions (105, 106) of** the values of relative humidity ***RH*_{*in*(*i*)}** inside the cable conduit fitting (1) and the values of relative humidity ***RH*_{*out*(*i*)}** outside the cable conduit fitting (1) into, respectively, the values of absolute humidity ***AH*_{*in*(i)}** inside the cable conduit fitting (1) and the values of absolute humidity ***Ax*_{*out*(*i*)}** outside the cable conduit fitting (1), where ***i* = (1, 2, ... , *n*);**
- low-frequency spectral components of the instantaneous values of temperature ***T*_{*in*(*i*)}** inside the cable conduit fitting (1) from the created (102C1) time series are removed (103B1) from Fourier spectrums of said values and low-frequency spectral components of the instantaneous values of temperature ***T*_{*out*(*i*)}** outside the cable conduit fitting (1) from the created (102B2) time series are removed (103B2) from Fourier spectrums of said values, where ***i* = (1, 2, ... , *n*);** and
- inverse Fourier transform is performed (104B1) for high frequency spectral components of the instantaneous values of temperature ***T*_{*in*(*i*)}** inside the cable conduit fitting (1) and inverse Fourier transform is performed (104B2) for high frequency spectral components of the instantaneous values of temperature ***T*_{*out*(*i*)}** outside the cable conduit fitting (1), where ***i* = (1, 2, ... , *n*).**

10. A cable conduit fitting monitoring arrangement (10),
wherein said arrangement (10) is adapted to be fixed to a cable conduit fitting (1),
the cable conduit fitting monitoring arrangement (10) comprises
- at least one first sensor (11) exposed to the environment inside the cable conduit fitting (1), wherein the least one first sensor (11) is configured to detect (101A1) values of relative concentration of gas with variable concentration ***Rx*_{*in*(*i*)}** inside the cable conduit fitting (1);
- a control unit (12), wherein the control unit (12) is configured to communicate with the at least one first sensor (11),
**characterized in that**,
- the cable conduit fitting monitoring arrangement (10) comprises further at least one second sensor (13) exposed to the environment outside the cable conduit fitting (1), wherein the at least one second sensor (13) is configured to detect (101A2) values of relative concentration of gas with variable concentration ***Rx*_{*out*(*i*)}** outside the cable conduit fitting (1);
- the control unit (12) is configured further to communicate with the at least one second sensor (13) and the control unit (12) is configured to carry out the steps of the method according to any of the preceding claims from 1-7.

11. The cable conduit fitting monitoring arrangement according to claim 10, wherein the at least one first sensor (11) is configured to detect (101A1) values of relative humidity ***RH*_{*in*(*i*)}** inside the cable conduit fitting(1) and to detect (101B1) instantaneous values of temperature ***T*_{*in*(*i*)}** inside the cable conduit fitting (1) and wherein the at least one second sensor (13) is configured to detect (101A2) values of relative humidity ***RH*_{*out*(*i*)}** inside the cable conduit fitting (1) and to detect (101B2) instantaneous values of temperature ***T*_{*out*(*i*)}** outside the cable conduit fitting (1), where ***i* = (1, 2, ... , *n*),** wherein the control unit (12) is configured further to carry out the steps of the method according to claim 8.

12. The cable conduit fitting monitoring arrangement according to claim 10 or 11, wherein the control unit (12) is configured to carry out the steps of the method according to claim 2 or 9 or the arrangement (10) comprises a high-pass filter configured to communicate with the control unit (12) and to carry out the steps of the method according to claim 2 or claim 9.

13. The cable conduit fitting monitoring arrangement according to any of the preceding claims from 10 to 12, wherein the arrangement (10) comprises a battery unit (14).

14. The cable conduit fitting monitoring arrangement according to any of the preceding claims from 10 to 13, wherein said arrangement (10) comprises a protecting cover (15) for fixing to the body of the cable conduit fitting (1).

15. The cable conduit fitting monitoring arrangement according to any of the preceding claims from 10 to 14, wherein said arrangement (10) comprises a notification unit (16) configured to communicate with the control unit (12) and to notify a user of the arrangement (10) about hermiticity/non-hermicity of the cable conduit fitting (1).
